# EUROPÄISCHE PATENTSCHRIFT

(11) **EP 2 552 836 B1**
(45) Veröffentlichungstag und Bekanntmachung des Hinweises auf die Patenterteilung: **15.11.2017**
(21) Anmeldenummer: 11713730.7
(22) Anmeldetag: 01.04.2011
(51) Int. Cl.: C02F 1/42

(54) **VERFAHREN ZUR ÜBERWACHUNG EINER WASSERBEHANDLUNGSANLAGE FÜR EINE KREISLAUF-BEFÜLLUNGSANLAGE**
METHOD FOR MONITORING A WATER-TREATMENT SYSTEM FOR A CIRCUIT-FILLING SYSTEM
PROCÉDÉ DE SURVEILLANCE D'UNE INSTALLATION DE TRAITEMENT D'EAU POUR UNE INSTALLATION DE REMPLISSAGE DE CIRCUIT

(30) Priorität: 01.04.2010 DE 102010003636
(43) Veröffentlichungstag der Anmeldung: 06.02.2013
(73) Patentinhaber: Judo Wasseraufbereitung GmbH, 71364 Winnenden (DE)
(72) Erfinder: SÖCKNICK, Ralf, 70806 Kornwestheim (DE); STARK, Markus, 69221 Dossenheim (DE)
(74) Vertreter: Kohler Schmid Möbus Patentanwälte
(86) Internationale Anmeldenummer: PCT/EP2011/055092
(87) Internationale Veröffentlichungsnummer: WO 2011/121107

(56) Entgegenhaltungen:
- EP-A1- 2 048 117
- WO-A1-2010/017792
- DE-A1-102007 009 959
- DE-B3-102008 045 354
- US-A1- 2006 086 648

## Beschreibung

Die Erfindung betrifft ein Verfahren zur Überwachung einer Wasserbehandlungsanlage für eine Wasserkreislauf-Befüllungsanlage, mit welcher beispielsweise Wasser in einen Wasserkreislauf, insbesondere einen Heiz- oder Kühlkreislauf, eingefüllt wird, wobei die Wasserbehandlungsanlage einen Behälter mit Wasserbehandlungselementen umfasst, und wobei der Erschöpfungszustand der Wasserbehandlungselemente mit einer Messeinheit überwacht wird.

Eine solches Verfahren zur Überwachung einer Wasserkreislauf-Befüllungsanlage ist aus der DE 10 2005 036 356 B4 bekannt geworden.

Bei der Befüllung von Wasserkreisläufen mit Wasser, etwa bei einem Heizungssystem in einem Gebäude, schreiben viele Hersteller die Befüllung mit Wasser einer bestimmten Qualität vor. Dadurch soll die Korrosion vermindert oder auch die Bildung von Ablagerungen im Wasserkreislauf (insbesondere einem Kessel) verhindert werden. Daher verfügen Wasserkreislauf-Befüllungsanlagen meist über einen Behälter mit Wasserbehandlungselementen, etwa Enthärtern, durch die das für die Befüllung vorgesehene Wasser geleitet wird.

Die Wasserbehandlungselemente können jedoch nur eine begrenzte Menge Wasser behandeln.

Die DE 10 2005 036 356 B4 beschreibt eine Wasserbehandlungsanlage für eine Heizanlage. Die Überwachung des Verschleißzustandes der dortigen lonentauscherelemente erfolgt über eine vor dem Behälter mit ionentauscherelementen angeordneten Messeinheit. Es ist nicht ersichtlich, dass mit der Messeinheit eine wechselnde Rohwasserqualität (Qualität des unbehandelten Wassers) erfasst oder berücksichtigt werden kann. Ebenso nachteilig ist es, dass keine Daten des behandelten Wassers erfasst werden, so dass mögliche Fehler bei der Bestimmung des Verschleißzustandes der lonentauscherelemente nicht erkannt werden. Die Veröffentlichungsschrift WO 2010/017792 A1 beschreibt eine Steuereinheit für eine Wasserenthärtungsvorrichtung, bei der der Erschöpfungszustand des verwendeten Ionenaustauscherharzes durch Messung des Durchflusses und der Leitfähigkeit im Zulauf ermittelt wird.

### Aufgabe der Erfindung

Es ist die Aufgabe der vorliegenden Erfindung, ein Verfahren zur Überwachung einer Wasserbehandlungsanlage, insbesondere einer Wasserkreislauf-Befüllungsanlage, vorzustellen, mit dem eine sich ändernde Rohwasserqualität automatisch erkannt werden kann und die Überwachung des Verschleißzustandes der Wasserbehandlungselemente mit hoher Sicherheit möglich ist.

### Kurze Beschreibung der Erfindung

Diese Aufgabe wird gelöst durch ein Verfahren zur Überwachung einer Wasserbehandlungsanlage, nämlich einer Wasserkreislauf-Befüllungsanlage, wobei mit der Wasserbehandlungsanlage Wasser in einen Wasserkreislauf, insbesondere einen Heiz- oder Kühlkreislauf, eingefüllt wird, wobei die Wasserbehandlungsanlage einen Behälter mit Wasserbehandlungselementen umfasst, wobei durch die Wasserbehandlungselemente eine Entsalzung oder Teilentsalzung erfolgt, wobei der Erschöpfungszustand der Wasserbehandlungselemente mit einer Messeinheit überwacht wird, wobei bei der Überwachung folgende Parameter erfasst werden: eine durch den Behälter fließende Wassermenge M, eine erste, momentane Leitfähigkeit L1 von unbehandeltem Wasser, eine zweite, momentane Leitfähigkeit L2 von behandeltem Wasser oder von teilbehandeltem Wasser nach einer Verschneidung, wobei eine Erschöpfung der Wasserbehandlungselemente signalisiert wird, wenn eine aus der Wassermenge M und einer oder mehreren, zugehörigen ersten Leitfähigkeiten L1 ermittelte momentane Restkapazität RK der Wasserbehandlungselemente einen ersten Grenzwert GW1 unterschreitet, und wobei ebenfalls eine Erschöpfung der Wasserbehandlungselemente signalisiert wird, wenn eine Abweichung der zweiten, momentanen Leitfähigkeit L2 von einem vorgegebenen Sollwert SW einen zweiten Grenzwert GW2 überschreitet, wobei ein fester Sollwert SW vorgegeben ist, so dass eine doppelte Absicherung der Wasserbehandlung stattfindet. Im Rahmen der Erfindung findet eine doppelte Absicherung der Wasserbehandlung statt. Es wird sowohl die Restkapazität der Wasserbehandlungselemente über die behandelte Wassermenge, gewichtet mit der bei der Entnahme herrschenden Rohwasserqualität (Qualität des unbehandelten Wassers, gemessen durch die erste, momentane Leitfähigkeit L1), als auch die Qualität des behandelten oder teilbehandelten Wassers (gemessen durch die zweite, momentane Leitfähigkeit L2) überwacht. Die Erfindung sieht also zwei Überwachungskriterien vor, wobei eine Erschöpfung der Wasserbehandlungselemente signalisiert wird, wenn mindestens ein Kriterium erfüllt ist.

Die Signalisierung der Erschöpfung erfolgt typischerweise durch eine Alarmmeldung, etwa durch ein oder mehrere akustische Signale, optische Signale, elektrische Signale oder Funksignale (z.B. Nachricht an ein Mobiltelefon oder an eine Leitwarte). Das Signalisieren einer Erschöpfung, die aus M und L1 ermittelt wurde, kann mit einem anderen Signal erfolgen als das Signalisieren einer Erschöpfung, die aus L2 und SW ermittelt wurde.

Die Messeinheit bzw. eine zugehörige Steuereinheit erkennt die Wasserqualität des zu behandelnden Wassers und deren Änderung über L1 automatisch. Dies ist besonders wichtig bei wechselnder Wasserqualität (z.B. bei mobilem Einsatz in unterschiedlichen Gegenden oder in Gegenden mit Mischwasserversorgung). Es kann eine optimale Ausnutzung der Kapazität der Wasserbehandlungselemente erfolgen, insbesondere kann ein frühzeitiger oder zu später Austausch bzw. eine frühzeitige oder zu späte Regeneration der Wasserbehandlungselemente vermieden werden.

Der erste Grenzwert GW1 gibt die minimale Behandlungsreserve (in Liter) an. Meist wird GW1 in der Größenordnung einiger zehn Liter gewählt, kann aber auch 0 betragen. Der zweite Grenzwert GW2 gibt die maximal zulässige Abweichung der Leitfähigkeit L2 des behandelten Wassers von einem vorgegeben Sollwert SW an. Weicht die zweite Leitfähigkeit L2 vom Sollwert stark ab, ist dies ein Indiz für eine Erschöpfung der Wasserbehandlungselemente oder einen Defekt oder eine Fehlfunktion in den Wasserbehandlungselementen oder einem zugehörigen Ventilsystem. GW2 kann auch für verschiedene Richtungen einer Abweichung (nach "oben" bzw. "unten") verschiedene Werte umfassen.

### Bevorzugte Varianten der Erfindung

Erfindungsgemäß erfolgt durch die Wasserbehandlungselemente eine Entsalzung oder Teilentsalzung. Im Falle einer Entsalzung oder Teilentsalzung kann der Behandlungserfolg unmittelbar an der zweiten, momentanen Leitfähigkeit abgelesen werden. Bei Entfernung von Ionen bei einer Voll- oder Teilentsalzung verringert sich die gemessene Leitfähigkeit entsprechend. Die Entsalzung oder Teilentsalzung verringert Korrosion und Steinbildung im nachgelagerten Wasserkreislauf.

Bevorzugt ist eine Verfahrensvariante, bei der die momentane Restkapazität RK, ausgedrückt in einer bei der momentanen Qualität des unbehandelten Wassers verbleibenden, behandelbaren Wassermenge, neu bestimmt wird, sobald
a) sich die erste, momentane Leitfähigkeit L1 ändert, und/oder
b) der Behälter mit den Wasserbehandlungselementen gewechselt wird oder die Wasserbehandlungselemente regeneriert werden. Die momentane Wasserqualität des unbehandelten Wassers wird über die erste, momentane Leitfähigkeit L1 abgeschätzt. Die Restkapazität entspricht physikalisch einer bestimmten Menge an Ionen, die noch behandelt werden können. Falls sich die Wasserqualität (also der Ionengehalt im Wasser) gemäß a) ändert, wird die behandelbare Wassermenge entsprechend korrigiert; die behandelbare Wassermenge ist eine für den Anwender anschauliche Größe. Diese Variante ist besonders vorteilhaft bei mobilem Einsatz an Orten mit unterschiedlicher Rohwasserqualität. Im Fall b) wird die behandelbare Wassermenge zurückgesetzt (entsprechend der vollen Grundkapazität der Wasserbehandlungselemente). Ein Wechsel des Behälters oder eine Regeneration der Wasserbehandlungselemente wird durch eine manuelle Eingabe über eine Eingabevorrichtung ("Quittieren") bekannt gemacht, oder eine elektronische Steuereinheit erkennt den Wechsel oder die Regeneration automatisch (z.B. über Sensoren) und beginnt eine Neuberechnung der Restkapazität. Ein Behälterwechsel erfolgt nach Erschöpfung oder wenn eine andere Wasserbehandlung erforderlich ist. Im Übrigen wird die momentane Restkapazität gemäß dem laufenden Wasserverbrauch anhand M aktualisiert. Bei einer vorteilhaften Verfahrensvariante wird der Wasserfluss durch die Wasserbehandlungsanlage unterbrochen, wenn die Wasserbehandlungselemente erschöpft sind. Dadurch wird vermieden, dass unbehandeltes oder ungenügend behandeltes Wasser in einen Heiz- oder Kühlkreislauf eingefüllt wird. Der Wasserfluss wird bevorzugt automatisch gestoppt, wenn eine Erschöpfung signalisiert wird, etwa mittels einer elektronischen Steuereinheit.

Bevorzugt ist auch eine Verfahrensvariante, bei der vorgesehen ist, dass die zweite, momentane Leitfähigkeit L2 in teilbehandeltem Wasser gemessen wird, und dass das Verschnittverhältnis VV von unbehandeltem und behandeltem Wasser so nachgeregelt wird, dass die zweite, momentane Leitfähigkeit L2 dem Sollwert SW entspricht. Dies gewährleistet eine optimale Wasserqualität und Sicherheit, falls teilbehandeltes Wasser für den Heiz- bzw. Kühlkreislauf erforderlich ist. Zusätzlich kann die Restkapazität der Wasserbehandlungselemente optimal ausgenutzt werden, da ein Anstieg der Leitfähigkeit bzw. Härte des behandelten Wassers gegen Ende der Behandlungskapazität durch Zumischen eines höheren Anteils an behandeltem Wasser kurzfristig kompensiert werden kann.

Bei einer anderen Verfahrensvariante ist vorgesehen, dass die zweite, momentane Leitfähigkeit L2 in teilbehandeltem Wasser gemessen wird, dass zunächst das Verschnittverhältnis VV von unbehandeltem Wasser und behandeltem Wasser durch die erste, momentane Leitfähigkeit L1 gesteuert wird,
und dass zu einem späteren Zeitpunkt, insbesondere nach dem Signalisieren, dass eine Abweichung der zweiten, momentanen Leitfähigkeit L2 vom vorgegebenen Sollwert SW einen zweiten Grenzwert GW2 überschreitet, die Steuerung des Verschnittverhältnisses VV auf die zweite, momentane Leitfähigkeit L2 umgestellt wird, so dass anschließend das Verschnittverhältnis VV von unbehandeltem und behandeltem Wasser so nachgeregelt wird, dass die zweite, momentane Leitfähigkeit L2 dem Sollwert SW entspricht. Auch mit dieser Variante kann die Restkapazität der Wasserbehandlungselemente optimal genutzt werden: Wenn erstmals die Auswertung von L2, SW und GW2 eine Erschöpfung signalisiert, kann die verbleibende Restkapazität noch (unter Verringerung des Anteils an unbehandeltem Wasser) aufgebraucht werden, ohne unerlaubt vom Sollwert abzuweichen. Sollte nach der Umstellung der Verschnittsteuerung erneut L2 mehr als GW2 von SW abweichen, sollte dies erneut signalisiert werden; dies indiziert eine vollständige Erschöpfung der Wasserbehandlungselemente. Die im Rahmen des erfindungsgemäßen Verfahrens verwendete Vorrichtung umfasst
- einen Behälter mit Wasserbehandlungselementen,
- und eine Messeinheit zur Bestimmung des Erschöpfungszustands der Wasserbehandlungselemente, wobei die Messeinheit umfasst:
   - erste Mittel, insbesondere einen ersten Leitfähigkeitssensor, zur Bestimmung einer ersten, momentanen Leitfähigkeit L1 von unbehandeltem Wasser,
   - zweite Mittel, insbesondere einen zweiten Leitfähigkeitssensor, zur Bestimmung einer zweiten, momentanen Leitfähigkeit L2 von behandeltem Wasser oder von teilbehandeltem Wasser nach einer Verschneidung,
   - einen Durchflussmesser zur direkten oder indirekten Bestimmung der durch den Behälter fließenden Wassermenge M, wobei die Wasserbehandlungsanlage weiterhin eine elektronische Steuereinheit mit einem Speicher umfasst, in welchem abgespeichert sind:
   - ein erster Grenzwert GW1 für eine minimale Restkapazität der Wasserbehandlungselemente,
   - und ein zweiter Grenzwert GW2 für eine maximal zulässige Abweichung der zweiten, momentanen Leitfähigkeit L2 von einem Sollwert SW. Die Wasserbehandlungsanlage wird bevorzugt mit einem erfindungsgemäßen, obigen Verfahren überwacht, und kann insbesondere zur Befüllung eines Wasserkreislaufs verwendet werden. Zwei Leitfähigkeitssensoren messen im behandelten (oder teilbehandeltem) und unbehandelten Wasser. Alternativ misst ein Leitfähigkeitssensor sowohl behandeltes (oder teilbehandeltes) und unbehandeltes Wasser. Hierzu wird mittels einer entsprechenden Ventilschaltung einerseits behandeltes (oder teilbehandeltes) und andererseits unbehandeltes Wasser dem Leitfähigkeitssensor zugeführt. Das zweite Mittel kann also z. B. eine Ventilanordnung sein, mit welcher behandeltes oder teilbehandeltes Wasser auf einen einzigen Leitfähigkeitssensor der Wasserbehandlungsanlage zu bestimmten Zeiten geleitet wird, wobei der einzige Leitfähigkeitssensor im Übrigen die Leitfähigkeit des unbehandelten Wassers bestimmt. Mit der elektronischen Steuereinheit wird aus L1 und M eine Restkapazität RK bestimmt und mit GW1 verglichen. Weiterhin wird in der Steuereinheit geprüft, ob L2 mehr als GW2 von SW abweicht. Dazu werden auch die Restkapazität RK und der Sollwert SW in der Steuereinheit berechnet und/oder gespeichert. Die Wasserbehandlungsanlage bietet eine doppelte Absicherung gegen die Verwendung von erschöpften Wasserbehandlungselementen und hat einen relativ einfachen Aufbau. Die Anlage erkennt die Wasserqualität im behandelten und unbehandelten Wasser und deren Änderung automatisch und kann dies bei der Wasserbereitstellung berücksichtigen.
Die Wasserbehandlungsanlage kann weiterhin einen Signalgeber umfassen. Der Signalgeber kann insbesondere akustische Signale, optische Signale, elektrische Signale oder auch Funksignale erzeugen. Die Steuereinheit ist dazu ausgebildet, den Signalgeber automatisch zu betätigen, wenn die momentane Restkapazität RK kleiner als GW1 ist; ebenso wird der Signalgeber von der Steuereinheit automatisch betätigt, wenn L2 um mehr als GW2 von SW abweicht. Alternativ oder zusätzlich kann die Steuereinheit einen Signalausgang für elektrische Signale aufweisen.

Eine weitere, vorteilhafte Ausführungsform sieht vor, dass die Wasserbehandlungselemente ausgewählt sind als
- Entsalzungseinrichtung, insbesondere mit einer Mischung aus Kationen- und Anionentauschern oder einer Umkehrosmosemembran,
- oder Teilentsalzungseinrichtung, insbesondere mit einem Kationentauscher in H-Form.

Besonders bevorzugt ist eine Ausführungsform, bei der die Wasserbehandlungsanlage eine Verschneideeinrichtung, insbesondere ein motorgesteuertes Verschneideventil, umfasst. Mittels der Verschneideeinrichtung kann teilenthärtetes oder teilentsalztes Wasser bereit gestellt werden, was manche Kesselhersteller für optimale Betriebsbedingungen fordern. Die Verschneideeinrichtung ist prinzipiell manuell oder automatisch mittels der elektronischen Steuereinheit steuerbar.

Bei einer besonders bevorzugten Ausführungsform ist die Wasserbehandlungsanlage als eine als Ganzes mobile Behandlungsgruppe ausgebildet. Damit kann die Anlage auf einfache Art und Weise zu unterschiedlichen Anwendungsorten transportiert werden. Die Wasserbehandlungsanlage kann insbesondere nach Verwendung leicht von einem ersten Wasserkreislauf getrennt und zu einem weiteren Wasserkreislauf verbracht werden.

Bei einer weiteren Ausführungsform ist der Behälter mit Wasserbehandlungselementen als Einwegpatrone ausgebildet, wobei die Einwegpatrone in einem Druckbehälter angeordnet ist. Ein solcher Behälter ist kostengünstig, und der Patronenwechsel ist einfach. Der Druckbehälter kann wiederverwendet werden. Es ist keine aufwändige Regeneration bei Wasserbehandlungselementen zur Vollentsalzung (Mischbett) nötig. Einwegpatronen können codiert sein, um die Art der Wasserbehandlung bzw. ein Behälterwechsel zu erkennen und um Verwechslungen auszuschließen. Unterschiedliche Kartuschen können abwechselnd eingesetzt werden, besonders bei wechselndem Einsatzort und bei wechselnden Anforderungen an das Heizungs- bzw. Kühlwasser.

Eine andere, vorteilhafte Ausführungsform sieht vor, dass Mittel zur Unterbrechung des Wasserflusses durch den Behälter vorgesehen sind, wenn die Wasserbehandlungselemente erschöpft sind, insbesondere wobei die Mittel zur Unterbrechung einen durch die Steuereinheit motorisch betätigbaren Absperrhahn umfassen. Mit dieser Ausführungsform kann eine Befüllung eines Heiz- oder Kühlkreislaufs mit ungenügend behandeltem Wasser leicht vermieden werden. Bevorzugt werden die Mittel zur Unterbrechung vollautomatisch bei einem Erschöpfungssignal geschlossen.

Bei einer besonders bevorzugten Ausführungsform umfasst die Wasserbehandlungsanlage eine Anzeige, auf der die momentane Restkapazität RK der Wasserbehandlungselemente angezeigt wird. Die Anzeige gibt an, wie viel Wasser noch behandelt werden kann ("Countdown"). Unterschiedliche Kartuschen (Behälter mit Wasserbehandlungselementen) können separat herunter gezählt werden. Als zusätzliche Anzeigen sind insbesondere möglich: bereits behandelte Wassermenge, gemessene Leitfähigkeiten und ggf. daraus abgeleitete Wasserhärten des unbehandelten und behandelten Wassers, Grenzwerte GW1 und GW2, Art der aktuellen Wasserbehandlung (Enthärtung, Entsalzung, Teilentsalzung).

Bevorzugt ist auch eine Ausführungsform, bei der die Wasserbehandlungsanlage einen Rückflussverhinderer aufweist. Mit dem Rückflussverhinderer kann das Rückfließen von Heizungs- bzw. Kühlwasser in das örtliche Wassernetz (etwa das Trinkwassersystem) verhindert werden. Bevorzugt ist der Rückflussverhinderer am Ablauf der Wasserbehandlungsanlage eingebaut, so dass auch in die übrige Wasserbehandlungsanlage (insbesondere den Behälter mit den Wasserbehandlungselementen) kein Kreislaufwasser gelangen kann.

Ebenfalls bevorzugt ist eine Ausführungsform, die vorsieht, dass ein Notstrommodul zur Energieversorgung der Wasserbehandlungsanlage vorgesehen ist. Mit dem Notstrommodul ist ein Betrieb der Anlage bei Unterbrechung der Netzversorgung z.B. bei einem Ortswechsel möglich; abgespeicherte Werte bleiben erhalten (etwa GW1 und GW2 in der Steuereinheit). Alternativ kann die Wasserbehandlungsanlage auch netzunabhängig über das Notstrommodul allein betrieben werden. Ebenso kann mit dem Notstrommodul ein Ventil geschlossen und der Wasserfluss unterbrochen werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig.1: eine schematische Darstellung einer für das erfindungsgemäße Verfahren geeigneten Wasserbehandlungsanlage mit zwei Leitfähigkeitssensoren, angeschlossen an einen Wasserkreislauf;
- Fig. 2: eine schematische Darstellung einer für das erfindungsgemäße Verfahren geeigneten Wasserbehandlungsanlage mit nur einem Leitfähigkeitssensor, angeschlossen an einen Wasserkreislauf.

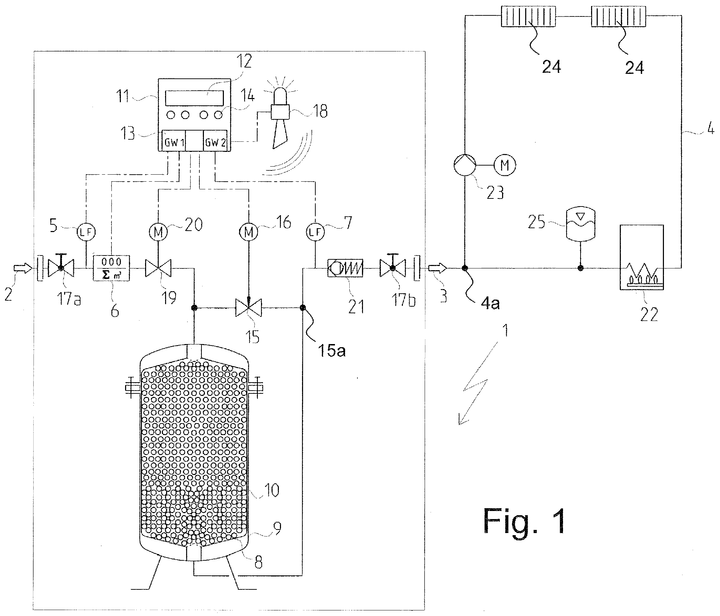

Die **Fig. 1** zeigt eine Wasserbehandlungsanlage 1, hier eine Wasserkreislauf-Befüllungsanlage, angeschlosssen an einen Wasserkreislauf 4, hier einen Heizkreislauf einer Heizungsanlage eines Gebäudes. Die Wasserbehandlungsanlage und der Wasserkreislauf bilden ein Wasserkreislauf-Befüllungssystem.

Über einen Zulauf 2 fließt der Wasserbehandlungsanlage 1 unbehandeltes Wasser (Rohwasser), etwa aus dem örtlichen Trinkwassernetz, zu. Am Zulauf 2 kann der Wasserfluss mit einem Hauptabsperrhahn 17a blockiert werden. Das zulaufende Wasser wird dann mit einem ersten Leitfähigkeitssensor 5 vermessen, wobei das Messergebnis (die erste, momentane Leitfähigkeit L1) an eine elektronische Steuereinheit 11 weitergegeben wird. Das zulaufende Wasser wird weiterhin über einen Durchflussmesser 6 geleitet, dessen Messergebnis (Wassermenge M) ebenfalls an die elektronische Steuereinheit 11 weitergegeben wird. Anschließend passiert das zulaufende Wasser ein Verschlussorgan, hier einen durch die elektronische Steuereinheit 11 motorisch betätigbaren Absperrhahn 19, vgl. Stellmotor 20.

Das unbehandelte Wasser wird dann aufgeteilt auf einen Bypasszweig und auf einen Wasserbehandlungszweig. Im Wasserbehandlungszweig wird das unbehandelte Wasser über Wasserbehandlungselemente 10 geleitet, die in einem (inneren) Behälter 8 angeordnet sind. Der Behälter 8 und die Wasserbehandlungselemente 10 sind hier in einem Druckbehälter 9 angeordnet. Man beachte, dass im Rahmen der Erfindung auch mehrere, parallel angeschlossene und einzeln auswählbare Behälter, insbesondere mit unterschiedlichen Typen von Wasserbehandlungselementen, vorgesehen sein können. Im Bypasszweig passiert das unbehandelte Wasser ein Verschneideventil 15, welches von der elektronischen Steuereinheit 11 motorisch betätigbar ist, vgl. Stellmotor 16. Die Einstellung des Verschneideventils 15 bestimmt die Anteile von unbehandeltem Wasser und behandeltem Wasser (und damit das Verschnittverhältnis VV) nach der Zusammenführung der beiden Zweige am Zusammenführungspunkt 15a.

Nach der Verschneidung wird mit einem zweiten Leitfähigkeitssensor 7 die momentane Leitfähigkeit L2 des Verschnittwassers (teilbehandelten Wassers) vermessen und das Messergebnis an die elektronische Steuereinheit 11 weitergeleitet. Das Verschnittwasser wird dann über einen Rückflussverhinderer 21 und einen ablaufseitigen Hauptabsperrhahn 17b einem Ablauf 3 zugeleitet.

Dieser Ablauf 3 ist an einen Zulaufpunkt 4a des Wasserkreislaufs 4 angeschlossen. Im Wasserkreislauf 4 sind eine Umwälzpumpe 23, mehrere Heizkörper 24, ein Heizkessel 22 und ein Membranausdehnungsgefäß 25 vorgesehen.

Die Gesamtheit der Messgeräte 5, 6, 7, welche an die Steuereinheit 11 angeschlossen sind, kann auch als eine Messeinheit bezeichnet werden, die bei der Überwachung der Wasserbehandlung eingesetzt wird.

Die Steuereinheit 11 bestimmt (in der Regel laufend) die verbleibende Restkapazität RK der Wasserbehandlungselemente 10. Dazu verfolgt die Steuereinheit 11 mit, welche Wassermenge M bei weicher ersten, momentanen Leitfähigkeit L1 behandelt wird. Die Steuereinheit 11 weist einen Speicher 13 auf, in welchem insbesondere ein erster Grenzwert GW1 für eine minimale Behandlungsreserve hinterlegt ist. Die Steuereinheit 11 vergleicht laufend, ob die (momentane) Restkapazität RK den ersten Grenzwert GW1 unterschreitet. Falls ja, wird über einen Signalgeber 18 dieser Zustand signalisiert.

Im Speicher 13 ist weiterhin ein zweiter Grenzwert GW2 hinterlegt. Falls die momentane, zweite Leitfähigkeit L2 des (hier) teilbehandelten Wassers um mehr als den zweiten Grenzwert GW2 von einem Sollwert SW abweicht, wird ebenfalls durch den Signalgeber 18 dieser Zustand signalisiert.

Wird beispielsweise in den Wasserbehandlungselementen 10 eine Entsalzung des Wassers betrieben, und das Verschnittverhältnis VV (das ist der Anteil des behandelten Wassers am Verschnittwasser) ist bei 50% (also ein Teil unbehandeltes Wasser wird mit einem Teil behandeltem Wasser gemischt), so kann erwartet werden, dass die zweite Leitfähigkeit L2 die Hälfte der ersten Leitfähigkeit L1 beträgt; der Sollwert SW wird dann entsprechend festgelegt. Wenn nun aber die zweite Leitfähigkeit stark (um mehr als den zweiten Grenzwert GW2) von diesem Sollwert abweicht, so ist dies ein Indiz für eine fehlerhafte Entsalzung. Steigt beispielsweise L2 stark an, so sind wahrscheinlich die Wasserbehandlungselemente 10 verbraucht.

Der Sollwert SW kann auch absolut festgesetzt werden, was insbesondere dann sinnvoll ist, wenn ein bestimmter Salzgehalt im Verschnittwasser gewünscht ist.

Das gewünschte Verschnittverhältnis VV wird in der Regel aus der ermittelten Rohwasserqualität, also aus der ersten momentanen Leitfähigkeit L1 im unbehandelten Wasser, und den Vorgaben des Anwenders oder Kesselherstellers abgeleitet. Mit dem Stellmotor 16 des Verschneideventils 15 kann dann eine dem gewünschten Verschnittverhältnis entsprechende Verstellposition des Verschneideventils 15 aufgesucht werden.

Es ist auch möglich, das Verschnittverhältnis anhand der ermittelten Qualtität des teilbehandelten Wassers, also anhand L2, nachzuführen, so dass L2 beim vorgegebenen Sollwert SW bleibt.

Ebenso ist es möglich, zunächst das Verschnittverhältnis anhand L1 zu steuern, und nach einer Erschöpfungsmeldung (oder einem anderen Indiz für einen fortgeschrittenen Erschöpfungsgrad) die Steuerung des Verschneideverhältnisses auf L2 umzustellen. L2 kann auch bei einsetzender Erschöpfung der Wasserbehandlungselemente 10 durch Erhöhung des Anteils des behandelten Wassers am Verschnittwasser dann noch einige Zeit (bzw. für eine gewisse Menge an bereitgestelltem Wasser) beim Sollwert SW gehalten werden. Dadurch wird die Restkapazität der Wasserbehandlungselemente 10 gut ausgenutzt.

Die Grenzwerte GW1 und GW2 und nötigenfalls der Sollwert SW können über eine Eingabevorrichtung 14 an der Steuereinheit 11 eingegeben werden.

Die Steuereinheit 11 verfügt über ein Display (eine Anzeige) 12, auf welcher die gültigen Grenzwerte und/oder Messergebnisse und/oder Ventileinstellungen und/oder Sollwerte angegeben werden können. Insbesondere kann die momentane Restkapazität RK angezeigt werden, was dem Benutzer die Planung bei Befüllungsprozessen erleichtert.

Man beachte, dass die in Fig. 1 dargestellte Anlage bei vollständig geschlossenem Verschneideventil 15 auch zu einer Vollbehandlung des Wassers eingesetzt werden kann. Mit dem Absperrhahn 19 kann außerdem der Wasserfluss im Erschöpfungsfall automatisch mittels der Steuereinheit 11 unterbrochen werden.

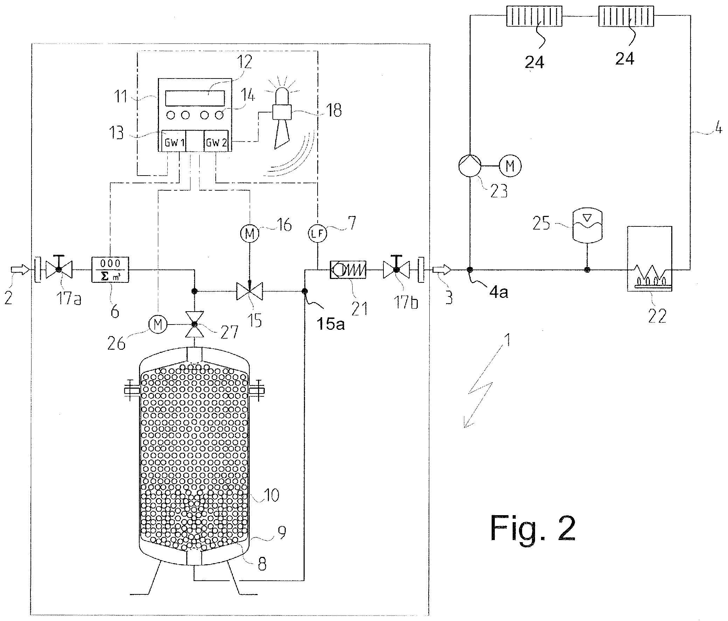

Die **Fig. 2** zeigt eine Wasserbehandlungsanlage 1 mit angeschlossenem Wasserkreislauf 4 ähnlich der in Fig. 1, so dass hier nur die Unterschiede diskutiert werden sollen.

Die Wasserbehandlungsanlage 1 von Fig. 2 weist lediglich einen einzigen Leitfähigkeitssensor 7 auf, welcher ablaufseitig angeordnet ist. Im normalen Betrieb der Wasserbehandlungsanlage 1 kann mit dem Leitfähigkeitssensor 7 die zweite, momentane Leitfähigkeit L2 des teilbehandeltem (oder vollbehandelten Wassers) bestimmt werden.

Um auch die erste, momentane Leitfähigkeit L1 des unbehandelten Wassers mit dem Leitfähigkeitsmesser 7 bestimmen zu können, werden die Ventile 27 und 15 eingesetzt. Beide Ventile 27, 15 sind über Stellmotoren 26, 16 mittels der Steuereinheit 11 verstellbar. Zur Messung von L1 wird zeitweilig das Ventil 27 geschlossen (und somit der Behälter 8 abgetrennt) und das Ventil 15 (Verschneideventil) geöffnet, so dass unbehandeltes Wasser zum Ablauf 3 - und damit auch am Leitfähigkeitsmesser 7 vorbei - fließt. Eine kleine Menge unbehandelten Wassers (im Vergleich zur Gesamtmenge an Wasser, die im Kreislauf 4 umläuft) beeinträchtigt den Wasserkreislauf 4 nicht; es kann aber auch das für die Messung umgeleitete, unbehandelte Wasser verworfen werden.

Wird während der Befüllung des Kreislaufs 4 keine Schwankung in der Qualität des zulaufenden (unbehandelten) Wassers erwartet, kann eine einzelne Messung von L1 zu Beginn der Kreislaufbefüllung genügen. Anderenfalls sollte in geeigneten zeitlichen Abständen der Normalbetrieb (während dessen L2 gemessen wird) für eine Aktualisierungsmessung von L1 unterbrochen werden. Mit dem Ventil 27 kann außerdem bei Erschöpfung der Wasserbehandlungselemente 10 der Wasserfluss durch die Wasserbehandlungsanlage 1 unterbrochen werden, d.h. wenn GW 1 unterschritten und/oder GW2 überschritten wird.

### Bezugszeichenliste

- 1:: Wasserbehandlungsanlage
- 2:: Zulauf
- 3:: Ablauf
- 4:: Wasserkreislauf (hier Heizkreislauf)
- 4a:: Zulaufpunkt des Wasserkreislaufs
- 5:: erster Leitfähigkeitssensor
- 6:: Durchflussmesser (Wasserzähler)
- 7:: zweiter Leitfähigkeitssensor
- 8:: innerer Behälter
- 9:: Druckbehälter
- 10:: Wasserbehandlungselemente
- 11:: elektronische Steuereinheit
- 12:: Display (Anzeige)
- 13:: Speicher mit den Grenzwerten GW1 und GW2
- 14:: Eingabevorrichtung
- 15:: Verschneideventil
- 15a:: Zusammenführungspunkt
- 16:: Stellmotor
- 17a:: Hauptabsperrhahn Zulauf
- 17b:: Hauptabsperrhahn Ablauf
- 18:: Signalgeber
- 19:: Absperrhahn (Verschlussorgan)
- 20:: Stellmotor
- 21:: Rückflussverhinderer
- 22:: Heizkessel
- 23:: Umwälzpumpe
- 24:: Heizkörper
- 25:: Membranausdehnungsgefäß
- 26:: Stellmotor
- 27:: Ventil

## Patentansprüche

1. Verfahren zur Überwachung einer Wasserbehandlungsanlage (1), nämlich einer Wasserkreislauf-Befüllungsanlage, wobei mit der Wasserbehandlungsanlage (1) Wasser in einen Wasserkreislauf (4), insbesondere einen Heiz- oder Kühlkreislauf, eingefüllt wird,
wobei die Wasserbehandlungsanlage (1) einen Behälter (8) mit Wasserbehandlungselementen (10) umfasst, wobei durch die Wasserbehandlungselemente (10) eine Entsalzung oder Teilentsalzung erfolgt,
wobei der Erschöpfungszustand der Wasserbehandlungselemente (10) mit einer Messeinheit überwacht wird,
wobei bei der Überwachung folgende Parameter erfasst werden:
- eine durch den Behälter (8) fließende Wassermenge M,
- eine erste, momentane Leitfähigkeit L1 von unbehandeltem Wasser,
- eine zweite, momentane Leitfähigkeit L2 von behandeltem Wasser oder von teilbehandeltem Wasser nach einer Verschneidung,
wobei eine Erschöpfung der Wasserbehandlungselemente (10) signalisiert wird, wenn eine aus der Wassermenge M und einer oder mehreren, zugehörigen ersten Leitfähigkeiten L1 ermittelte momentane Restkapazität RK der Wasserbehandlungselemente (10) einen ersten Grenzwert GW1 unterschreitet,
und wobei ebenfalls eine Erschöpfung der Wasserbehandlungselemente (10) signalisiert wird, wenn eine Abweichung der zweiten, momentanen Leitfähigkeit L2 von einem vorgegebenen Sollwert SW einen zweiten Grenzwert GW2 überschreitet, wobei ein fester Sollwert SW vorgegeben ist,
so dass eine doppelte Absicherung der Wasserbehandlung stattfindet.

2. Verfahren nach Anspruch 1, **dadurch gekennzeichnet, dass** die momentane Restkapazität RK, ausgedrückt in einer bei der momentanen Qualität des unbehandelten Wassers verbleibenden, behandelbaren Wassermenge, neu bestimmt wird, sobald
a) sich die erste, momentane Leitfähigkeit L1 ändert, und/oder
b) der Behälter (8) mit den Wasserbehandlungselementen (10) gewechselt wird oder die Wasserbehandlungselemente (10) regeneriert werden.

3. Verfahren nach einem der vorhergehenden Ansprüche, **dadurch gekennzeichnet, dass** der Wasserfluss durch die Wasserbehandlungsanlage (1) unterbrochen wird, wenn die Wasserbehandlungselemente (10) erschöpft sind.

4. Verfahren nach einem der Ansprüche 1 bis 3, **dadurch gekennzeichnet, dass** die zweite, momentane Leitfähigkeit L2 in teilbehandeltem Wasser gemessen wird, und dass das Verschnittverhältnis VV von unbehandeltem und behandeltem Wasser so nachgeregelt wird, dass die zweite, momentane Leitfähigkeit L2 dem Sollwert SW entspricht.

5. Verfahren nach einem der Ansprüche 1 bis 3, **dadurch gekennzeichnet, dass** die zweite, momentane Leitfähigkeit L2 in teilbehandeltem Wasser gemessen wird,
dass zunächst das Verschnittverhältnis VV von unbehandeltem Wasser und behandeltem Wasser durch die erste, momentane Leitfähigkeit L1 gesteuert wird,
und dass zu einem späteren Zeitpunkt, insbesondere nach dem Signalisieren, dass eine Abweichung der zweiten, momentanen Leitfähigkeit L2 vom vorgegebenen Sollwert SW einen zweiten Grenzwert GW2 überschreitet, die Steuerung des Verschnittverhältnisses VV auf die zweite, momentane Leitfähigkeit L2 umgestellt wird, so dass anschließend das Verschnittverhältnis VV von unbehandeltem und behandeltem Wasser so nachgeregelt wird, dass die zweite, momentane Leitfähigkeit L2 dem Sollwert SW entspricht.

6. Verfahren nach einem der vorhergehenden Ansprüche, **dadurch gekennzeichnet, dass** die Wasserbehandlungselemente (10) ausgewählt sind als
- Entsalzungseinrichtung, insbesondere mit einer Mischung aus Kationen- und Anionentauschern oder einer Umkehrosmosemembran,
- oder Teilentsalzungseinrichtung, insbesondere mit einem Kationentauscher in H-Form.

7. Verfahren nach einem der vorhergehenden Ansprüche, **dadurch gekennzeichnet, dass** die Wasserbehandlungsanlage (1) umfassend eine Verschneideeinrichtung, insbesondere ein motorgesteuertes Verschneideventil (15), ausgewählt ist.

8. Verfahren nach einem der vorhergehenden Ansprüche, **dadurch gekennzeichnet, dass** die Wasserbehandlungsanlage (1) als eine als Ganzes mobile Behandlungsgruppe ausgewählt ist.

9. Verfahren nach einem der vorhergehenden Ansprüche, **dadurch gekennzeichnet, dass** der Behälter (8) mit Wasserbehandlungselementen (10) als Einwegpatrone ausgewählt ist, wobei die Einwegpatrone in einem Druckbehälter (9) angeordnet ist.

10. Verfahren nach einem der vorhergehenden Ansprüche, **dadurch gekennzeichnet, dass** Mittel zur Unterbrechung des Wasserflusses durch den Behälter (8) vorgesehen sind, wenn die Wasserbehandlungselemente (10) erschöpft sind,
insbesondere wobei die Mittel zur Unterbrechung umfassend einen durch die Steuereinheit (11) motorisch betätigbaren Absperrhahn (19) ausgewählt sind.

11. Verfahren nach einem der vorhergehenden Ansprüche, **dadurch gekennzeichnet, dass** die Wasserbehandlungsanlage (1) umfassend eine Anzeige (12) ausgewählt ist, auf der die momentane Restkapazität RK der Wasserbehandlungselemente (10) angezeigt wird.

12. Verfahren nach einem der vorhergehenden Ansprüche, **dadurch gekennzeichnet, dass** die Wasserbehandlungsanlage (1) aufweisend einen Rückflussverhinderer (21) ausgewählt ist.

13. Verfahren nach einem der vorhergehenden Ansprüche, **dadurch gekennzeichnet, dass** ein Notstrommodul zur Energieversorgung der Wasserbehandlungsanlage (1) vorgesehen ist.

## Claims

1. Method for monitoring a water treatment system (1), namely a water circuit filling system, wherein water is filled into a water circuit (4), in particular a heating or cooling circuit, by means of the water treatment system (1), wherein the water treatment system (1) comprises a container (8) with water treatment elements (10), wherein the water treatment elements (10) perform desalination or partial desalination,
wherein the depletion state of the water treatment elements (10) is monitored by a measuring unit,
wherein the monitoring comprises detection of the following parameters:
- an amount of water M that flows through the container (8),
- a first instantaneous conductivity L1 of untreated water,
- a second instantaneous conductivity L2 of treated water or of partially treated water after blending,
wherein depletion of the water treatment elements (10) is signalled when an instantaneous residual capacity RK of the water treatment elements (10) determined from the amount of water M and one or more associated first conductivities L1 falls below a first limit value GW1,
and wherein depletion of the water treatment elements (10) is also signalled when a deviation of the second instantaneous conductivity L2 from a predetermined desired value SW exceeds a second limit value GW2, wherein a fixed desired value SW is predetermined, such that a double protection of the water treatment is provided.

2. Method according to claim 1, **characterized in that** the instantaneous residual capacity RK, expressed in an amount of treatable water that remains at the instantaneous quality of the untreated water, is newly determined as soon as
a) the first instantaneous conductivity L1 changes and/or
b) the container (8) with the water treatment elements (10) is changed or the water treatment elements (10) are regenerated.

3. Method according to any one of the preceding claims, **characterized in that** the water flow through the water treatment system (1) is interrupted when the water treatment elements (10) are depleted.

4. Method according to any one of the claims 1 to 3, **characterized in that** the second instantaneous conductivity L2 is measured in the partially treated water and the blending ratio VV of untreated and treated water is readjusted such that the second instantaneous conductivity L2 corresponds to the desired value SW.

5. Method according to any one of the claims 1 to 3, **characterized in that** the second instantaneous conductivity L2 is measured in partially treated water,
that at first the blending ratio VV of untreated water and treated water is controlled by the first instantaneous conductivity L1,
and that at a later point in time, in particular after signalling that a deviation of the second instantaneous conductivity L2 from the predetermined desired value SW exceeds a second limit value GW2, the control of the blending ratio VV is changed to the second instantaneous conductivity L2 such that subsequently, the blending ratio VV of untreated and treated water is readjusted such that the second instantaneous conductivity L2 corresponds to the desired value SW.

6. Method according to any one of the preceding claims, **characterized in that** the water treatment elements (10) are selected as
- desalination device, in particular comprising a mixture of cation and anion exchangers or a reverse osmosis membrane,
- or partial desalination device, in particular comprising a cation exchanger of H type.

7. Method according to any one of the preceding claims, **characterized in that** the water treatment system (1) is selected comprising a blending device, in particular a motor-driven blending valve (15).

8. Method according to any one of the preceding claims, **characterized in that** the water treatment system (1) is selected as a treatment group which can be moved as a whole.

9. Method according to any one of the preceding claims, **characterized in that** the container (8) with water treatment elements (10) is selected as disposable cartridge, wherein the disposable cartridge is arranged in a pressure container (9).

10. Method according to any one of the preceding claims, **characterized in that** means are provided for interrupting the water flow through the container (8) when the water treatment elements (10) are depleted,
in particular wherein the means for interruption are selected comprising a shut-off valve (19) which can be operated motor-driven by the control unit (11).

11. Method according to any one of the preceding claims, **characterized in that** the water treatment system (1) is selected comprising a display (12) on which the instantaneous residual capacity RK of the water treatment elements (10) is displayed.

12. Method according to any one of the preceding claims, **characterized in that** the water treatment system (1) is selected comprising a backflow preventer (21).

13. Method according to any one of the preceding claims, **characterized in that** an emergency power module is provided for supplying energy to the water treatment system (1).

## Revendications

1. Procédé de surveillance d'une installation de traitement d'eau (1), notamment d'une installation de remplissage de circuit d'eau, ladite installation de traitement d'eau (1) permettant de remplir d'eau un circuit d'eau (4), en particulier un circuit de chauffage ou de refroidissement, laquelle installation (1) de traitement d'eau comprend un récipient (8) contenant des éléments de traitement d'eau (10), lesquels éléments de traitement d'eau (10) réalisent une déminéralisation ou une déminéralisation partielle,
dans lequel procédé l'état d'épuisement des éléments de traitement d'eau (10) est surveillé avec une unité de mesure,
les paramètres suivants étant détectés lors de la surveillance :
- une quantité d'eau M s'écoulant à travers le récipient (8),
- une première conductivité instantanée L1 d'eau non traitée et
- une deuxième conductivité instantanée L2 d'eau traitée ou d'eau partiellement traitée après un mélange,
dans lequel procédé un épuisement des éléments de traitement d'eau (10) est signalé lorsqu'une capacité résiduelle instantanée RK, déterminée à partir de la quantité d'eau M et d'une ou plusieurs premières conductivités L1 associées, des éléments de traitement d'eau (10) passe au-dessous d'une première valeur limite GW1,
et dans lequel procédé un épuisement des éléments de traitement d'eau (10) est également signalé lorsqu'un écart entre la deuxième conductivité instantanée L2 et une valeur de consigne SW prédéfinie passe au-dessus d'une deuxième valeur limite GW2, une valeur de consigne SW fixe étant prédéfinie,
de sorte qu'une double sécurité du traitement d'eau est assurée.

2. Procédé selon la revendication 1, **caractérisé en ce que** la capacité résiduelle instantanée RK, exprimée par une quantité d'eau traitable, restante étant donnée la qualité instantanée de l'eau non traitée, est déterminée à nouveau dès que
a) la première conductivité instantanée L1 change et/ou que
b) le récipient (8) avec les éléments de traitement d'eau (10) est remplacé ou les éléments de traitement d'eau (10) sont régénérés.

3. Procédé selon l'une des revendications précédentes, **caractérisé en ce que** le flux d'eau à travers l'installation de traitement d'eau (1) est interrompu lorsque les éléments de traitement d'eau (10) sont épuisés.

4. Procédé selon l'une des revendications 1 à 3, **caractérisé en ce que** la deuxième conductivité instantanée L2 est mesurée dans de l'eau partiellement traitée, et que le rapport de mélange VV d'eau non traitée et d'eau traitée est ajusté de sorte que la deuxième conductivité instantanée L2 corresponde à la valeur de consigne SW.

5. Procédé selon l'une des revendications 1 à 3, **caractérisé en ce que** la deuxième conductivité instantanée L2 est mesurée dans de l'eau partiellement traitée,
**que** le rapport de mélange VV d'eau non traitée et d'eau traitée est d'abord commandé par la première conductivité instantanée L1,
et qu'à un instant ultérieur, en particulier après la signalisation qu'un écart entre la deuxième conductivité instantanée L2 et la valeur de consigne SW prédéfinie est passé au-dessus d'une deuxième valeur limite GW2, la commande du rapport de mélange VV passe à la deuxième conductivité instantanée L2, de sorte qu'ensuite le rapport de mélange VV d'eau non traitée et d'eau traitée est ajusté de sorte que la deuxième conductivité instantanée L2 corresponde à la valeur de consigne SW.

6. Procédé selon l'une des revendications précédentes, **caractérisé en ce que** les éléments de traitement d'eau (10) sont choisis sous la forme
- d'un dispositif de déminéralisation, en particulier avec un mélange d'échangeurs de cations et d'anions ou une membrane d'osmose inverse,
- ou d'un dispositif de déminéralisation partielle, en particulier avec un échangeur de cations sous forme H.

7. Procédé selon l'une des revendications précédentes, **caractérisé en ce que** l'installation de traitement d'eau (1) est choisie comprenant un dispositif de mélange, en particulier une vanne de mélange (15) commandée par moteur.

8. Procédé selon l'une des revendications précédentes, **caractérisé en ce que** l'installation de traitement d'eau (1) est choisie comme un groupe de traitement mobile dans son ensemble.

9. Procédé selon l'une des revendications précédentes, **caractérisé en ce que** le récipient (8) est choisi avec des éléments de traitement d'eau (10) sous la forme d'une cartouche à usage unique, la cartouche à usage unique étant disposée dans un récipient sous pression (9).

10. Procédé selon l'une des revendications précédentes, **caractérisé en ce que** des moyens pour interrompre le flux d'eau à travers le récipient (8) lorsque les éléments de traitement d'eau (10) sont épuisés sont prévus, les moyens d'interruption étant en particulier choisis comprenant un robinet d'arrêt (19) actionnable par moteur par l'unité de commande (11).

11. Procédé selon l'une des revendications précédentes, **caractérisé en ce que** l'installation de traitement d'eau (1) est choisie comprenant un affichage (12) sur lequel la capacité résiduelle instantanée RK des éléments de traitement d'eau (10) est affichée.

12. Procédé selon l'une des revendications précédentes, **caractérisé en ce que** l'installation de traitement d'eau (1) est choisie présentant un dispositif anti-retour (21).

13. Procédé selon l'une des revendications précédentes, **caractérisé en ce qu'**un module d'alimentation de secours pour l'alimentation en énergie de l'installation de traitement d'eau (1) est prévu.
